# EUROPEAN PATENT APPLICATION

(11) **EP 2 309 627 A2**
(43) Date of publication of application: **13.04.2011**
(21) Application number: 10185663.1
(22) Date of filing: 01.10.2010
(51) Int. Cl.: H02K 55/06

(54) **Methods and apparatus for assembling homopolar inductor alternators including superconducting windings**

(30) Priority: 07.10.2009 US 575026
(71) Applicant: General Electric Company, Schenectady, NY 12345 (US)
(72) Inventor: Haran, Kiruba Sivasubramaniam, Niskayuna, NY 12309 (US); Laskaris, Evangelos Trifon, Niskayuna, NY 12309 (US); Alexander, James Pellegrino, Niskayuna, NY 12309 (US)
(74) Representative: Gray, Thomas

(57) **Abstract**

A homopolar electrical machine (10) includes a stator having a stationary magnetic core (28) and multiple stator windings (32) disposed within the stationary magnetic core (28). A rotor (12) includes a first set of pole pieces (22) at a first end of a shaft (14) and a second set of pole pieces (24) at a second end of the shaft (14). The pole pieces (22, 24) are separated by air gaps (38). The rotor (12) is a one-piece structure having only the shaft (14), the first set of pole pieces (22), and the second set of pole pieces (24) integrally formed from a single material. A stationary field coil (40) is coupled to the stator. The stationary field coil (40) includes a cryostat (41) configured to cool the stationary field coil (40) to superconducting temperatures. The stationary field coil (40) has a coil diameter that is at least partially greater than an outer diameter of the rotor (12). Each stator winding (32) is unitarily formed as a single structure that extends along a length of the homopolar electrical machine (10) beyond the first and second sets of pole pieces (22, 24) and is disposed within an air gap (33) of the homopolar electrical machine (10).

## Description

### BACKGROUND OF THE INVENTION

The present invention relates generally to electrical motor/generators, and more particularly to homopolar machines including superconducting windings.

At least some known superconducting electric machines include a superconducting field coil installed on the rotor. The superconducting coil is maintained at a temperature approaching zero degrees Kelvin using a continuous supply of cryogenic fluid, such as, for example, but not limited to helium (He₂). If a high temperature superconductor (HTS) is used in fabricating the field coil, a cryogenic fluid such as nitrogen (N₂) may be used to achieve superconducting temperatures. The cryogenic fluid is typically supplied to the superconducting field coil from a stationary cryocooler through a transfer coupling that is coupled to one end of the rotor. The transfer coupling channels the cryogenic fluid from a stationary portion to a rotating portion on the rotor. The cryogenic fluid is then routed through a cooling loop thermally coupled to the superconducting field coil and then back to the transfer coupling for return to the stationary cryocooler.

The superconducting field coil is subjected to thermal stresses, centrifugal stresses, and is provided with an electrical connection through the rotor to power the superconducting field coil. Accordingly, designing, fabricating and operating such a rotor may be difficult. For example, the superconducting coils, especially HTS coils, may be sensitive to mechanical strain. Specifically, because the coils are coupled to the rotor, the coils may be subjected to centrifugal forces that may cause strains and degrade the performance of the superconductor. In addition, because the coil is maintained at a cryogenic temperature, an elaborate support system may be needed to maintain the coil in position against the centrifugal forces while preserving the integrity of the thermal insulation between the coil and the parts of the rotor at ambient temperature.

### BRIEF DESCRIPTION OF THE INVENTION

In one aspect, a system includes a homopolar electrical machine. In a particular aspect, the homopolar electrical machine includes an AC device. The homopolar electrical machine includes a stator having a stationary magnetic core and multiple stator windings disposed within the stationary magnetic core. A rotor includes a first set of pole pieces at a first end of a shaft and a second set of pole pieces at a second end of the shaft. The pole pieces are separated by air gaps. The rotor is a one-piece structure having only the shaft, the first set of pole pieces, and the second set of pole pieces integrally formed from a single material. A stationary field coil is coupled to the stator. The stationary field coil includes a cryostat configured to cool the stationary field coil to superconducting temperatures. The stationary field coil has a coil diameter that is at least partially greater than an outer diameter of the rotor. Each stator winding is unitarily formed as a single structure that extends along a length of the homopolar electrical machine beyond the first and second sets of pole pieces and is disposed within an air gap of the homopolar electrical machine. The stationary field coil includes a high temperature superconductor.

In another aspect, a system includes an alternating current (AC) device. The AC device includes a stator having a stationary magnetic core and multiple stator windings disposed within the stationary magnetic core. A rotor includes a first set of pole pieces at a first end of a shaft and a second set of pole pieces at a second end of the shaft. Each pole piece is a radial segment that protrudes radially outward from a first diameter to a second diameter of the rotor. A stationary field coil is coupled to the stator. The stationary field coil is a superconducting coil having stationary cooling. The stationary field coil has a coil diameter that is at least greater than the first diameter of the rotor. Each stator winding is unitarily formed as a single structure that extends along a length of the AC device beyond the first and second sets of pole pieces and is disposed within an air gap of the AC device. The stationary field coil includes a high temperature superconductor.

In yet another aspect, a system includes an alternating current (AC) homopolar inductor alternator. The AC homopolar inductor alternator includes a stator having a stationary magnetic core and multiple stator windings disposed within the stationary magnetic core. A stationary field coil is coupled to the stator. The stationary field coil is a superconducting coil having stationary cooling. A ferromagnetic rotor includes first set of pole pieces at a first end of a shaft and a second set of pole pieces at a second end of the shaft. The stationary field coil has a coil diameter that is at least greater than first circumferential gaps between pole pieces in the first set of pole pieces and second circumferential gaps between pole pieces in the second set of pole pieces. Each stator winding is unitarily formed as a single structure that extends along a length of the AC homopolar inductor alternator beyond the first and second sets of pole pieces and is disposed within an air gap of the AC homopolar inductor alternator. The stationary field coil includes a high temperature superconductor.

In yet another aspect, a system includes an alternating current (AC) electrical machine. The AC electrical machine includes a stator having a stationary magnetic core and multiple stator windings disposed within the stationary magnetic core. Each stator winding includes a first substantially axially oriented portion, a second substantially axially oriented portion, and a diagonal portion extending between the first and second substantially axially oriented portions. Each stator winding is unitarily formed as a single structure having the first and second substantially axially oriented portions and the diagonal portion. A rotor includes a first set of pole pieces at a first end of a shaft and a second set of pole pieces at a second end of the shaft. The pole pieces are separated by air gaps. The rotor is a one-piece structure having only the shaft, the first set of pole pieces, and the second set of pole pieces integrally formed from a single material. A stationary field coil is coupled to the stator. The stationary field coil includes a cryostat configured to cool the stationary field coil to superconducting temperatures. The stationary field coil has a coil diameter that is at least partially greater than an outer diameter of the rotor. each stator winding is unitarily formed as a single structure that extends along a length of the AC electrical machine beyond the first and second sets of pole pieces and is disposed within an air gap of the AC electrical machine. The stationary field coil includes a high temperature superconductor.

### BRIEF DESCRIPTION OF THE DRAWINGS

There follows a detailed description of embodiments of the invention by way of example only with reference to the accompanying drawings, in which:
Figure 1 is a partial cross-sectional side view of an exemplary embodiment of a homopolar electrical machine,
Figure 2 is a partial cross-sectional side view of an exemplary embodiment of a homopolar electrical machine,
Figure 3 is a perspective view that illustrates an exemplary rotor that may be used with the machine shown in Figure 1,
Figure 4 is a cutaway end view of the rotor shown in Figure 2 taken along Line 3-3 shown in Figure 1,
Figure 5 is a perspective view that illustrates an alternative exemplary rotor that may be used with the machine shown in Figure 1,
Figure 6 is a partial cutaway perspective view of an exemplary pair of windings that may be used in the machine when using the alternative embodiment of the rotor shown in Figure 4,
Figure 7 is partial cutaway perspective view of an exemplary pair of axially oriented stator windings that may be used in the machine when using an alternate embodiment of the rotor shown in Figure 2,
Figure 8 is a diagrammatical representation of a plurality of exemplary stator windings that may be used in the machine when using an alternate embodiment of the rotor shown in Figure 2, and
Figure 9 is a partial sectional view of an exemplary embodiment of a homopolar electrical machine.

### DETAILED DESCRIPTION OF THE INVENTION

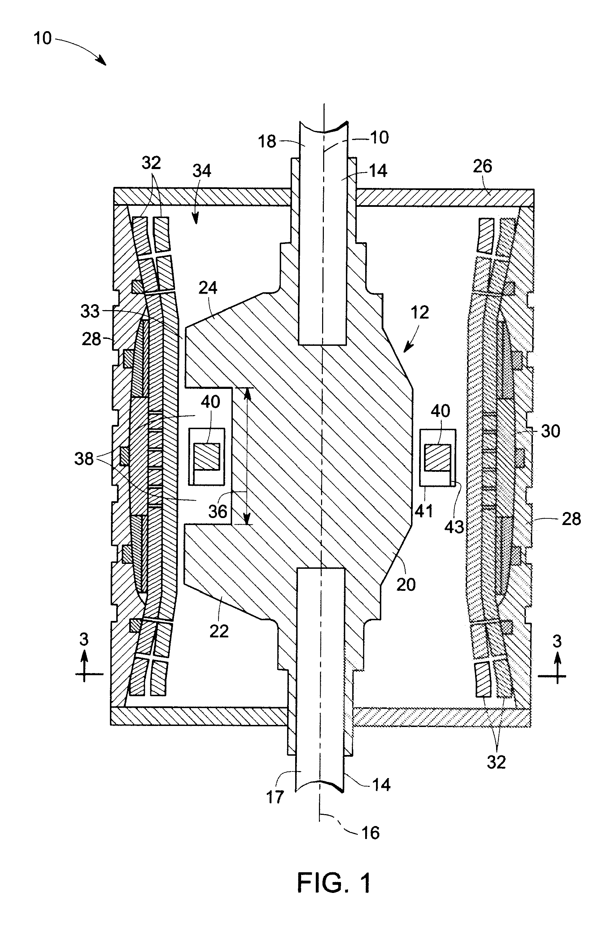

Figure 1 is a side partial cross-sectional view of an exemplary embodiment of a homopolar electrical machine 10 that includes a rotor 12 that includes a shaft 14 having a longitudinal axis 16. Rotor 12 is rotatable about axis 16. In the exemplary embodiment, shaft 14 is segmented such that a first shaft stub 17 and a second shaft stub 18 form shaft 14. Rotor 12 also includes at least one pole piece assembly 20 that includes a plurality of first pole pieces 22 that are separated axially on pole piece assembly 20 from a plurality of second pole pieces 24. In an alternative embodiment, shaft 12 is formed as a single monolithic structure that includes first pole pieces 22 and second pole pieces 24, axially separated and coupled to shaft 14. In another alternative embodiment, pole piece assembly 20, first pole pieces 22 and/or second pole pieces 24 are integrally formed with shaft 14 to define a monolithic rotor. In the exemplary embodiment, only one pole piece assembly 20 is illustrated. It should be understood that any number of pole piece assemblies 20 may be coupled together in tandem to define a rotor 12. Additionally, it should be understood that in the monolithic shaft 14 embodiment, any number of pole piece sets may be coupled to shaft 14 to define rotor 12. In an alternative embodiment, each plurality of homopolar pole pieces 22, 24 includes at least one additional row of a plurality of homopolar pole pieces (not shown) to improve dynamic performance. Each additional row of the plurality of pole pieces are displaced axially with respect to shaft 14 from each plurality of pole pieces 22, 24.

Rotor 12 is rotatably supported by a casing 26 that also houses a stator core 28 and stator yoke 30. A plurality of stator windings 32 are positioned in an air gap 33 in the machine 10. Specifically, the stator windings 32 are disposed in the air gap 33 between the rotor 12 and the stator core 28. Casing 26 is substantially cylindrical and includes a bore 34 extending therethrough. Rotor 12 is positioned at least partially within bore 34.

An axial separation distance 36 extending between first pole pieces 22 and second pole pieces 24 defines an air gap 38 between a field coil 40 and first pole pieces 22 and between field coil 40 and second pole pieces 24. In the exemplary embodiment, field coil 40 is positioned within a cryostat 41 that is coupled to stator core 28. Coil 40 is mechanically decoupled from rotor 12, and in the exemplary embodiment, is supported by stationary coil supports 43. In an alternative embodiment field coil 40 may be coupled to the rotor 12. Field coil 40 is fabricated from a superconducting material such that when cooled to superconducting temperatures, field coil 40 exhibits substantially zero resistance to electrical current flow.

In operation, machine 10 operates as an electrical generator or motor. Rotor 12 is rotated about axis 16 by a torsional force applied to it by a prime mover (not shown) coupled to shaft 14. An electrical current is supplied to stationary superconducting field coil 40. The electrical current generates a magnetic field surrounding field coil 40. Ferromagnetic shaft 14 passes through the axis of field coil 40, and therefore is magnetically coupled to field winding 40. The orientation of field coil 40 and first and second pole pieces 22 and 24 creates an interaction between the magnetic field of coil 40 and a permeance wave of the rotating ferro-magnetic poles 22 and 24 such that first pole pieces 22 are magnetized to a first polarity, North, for example, and such that second pole pieces 24 are magnetized to a second polarity, South, for example. The rotating homopolar magnetic field is magnetically coupled to stator windings 32.

In the exemplary embodiment, field coil 40 is stationary with respect to rotor 12 such that a relative difference in rotational speed between rotor 12 and the magnetic field generated by field coil 40 is the rotational speed of rotor 12. In an alternative embodiment, the magnetic field generated by field coil 40 rotates about axis 16 at least one of at a rate faster than rotor 12 and at a rate slower than rotor 12.

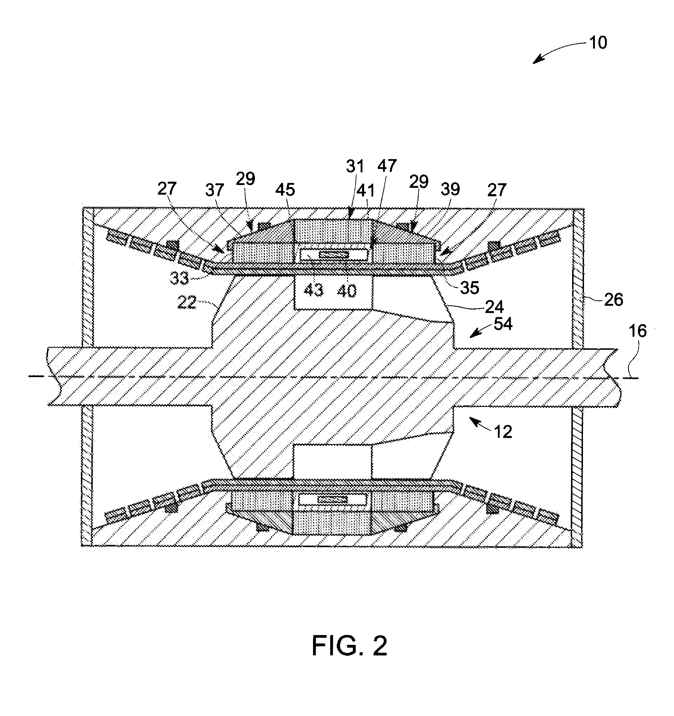

Figure 2 is a side partial cross-sectional view of an exemplary embodiment of a homopolar electrical machine 10. As illustrated, the machine 10 includes one or more axially laminated stator sections 27; one or more circumferentially laminated stator sections 29, and one or more radially laminated stator sections 31. In the illustrated embodiment, the one or more axially laminated stator sections 27 include a first plurality of axially laminated segments 33 and a second plurality of axially laminated segments 35, wherein the first and second plurality of axially laminated segments 33, 35 are axially offset from one another and disposed on opposite sides of the radially laminated stator section 31.

The one or more circumferentially laminated stator sections 29 may include a first plurality of circumferentially laminated segments 37 and a second plurality of circumferentially laminated segments 39, wherein the first and second plurality of circumferentially laminated segments 37, 39 are axially offset from one another and disposed on the opposite sides of the radially laminated stator section 31. In the illustrated embodiment, the one or more radially laminated stator sections 31 include a single plurality of radially laminated segments 41 in an axial position between the first and second plurality of axially laminated segments 33 and 35 and between the first and second plurality of circumferentially laminated segments 37 and 39.

In the illustrated embodiment, the field coil 40 is disposed within a cooling fluid 43 inside a cooling chamber 45, wherein the field coil 40 is disposed in an axial position between the first and second plurality of axially laminated segments 33, 35 and between the first and second plurality of circumferentially laminated segments 37, 39. In addition, the field coil 40 and the cooling chamber 45 are disposed concentrically within the radially laminated section 31. In other words, the field coil 40 is disposed on a stator side 47 of the windings 32. The cooling chamber 45 includes a continuous supply of a cryogenic fluid 43, such as neon or nitrogen. The field coil 40 may have a generally cylindrical or tubular geometry, while the cooling chamber 45 may have a generally hollow annular geometry.

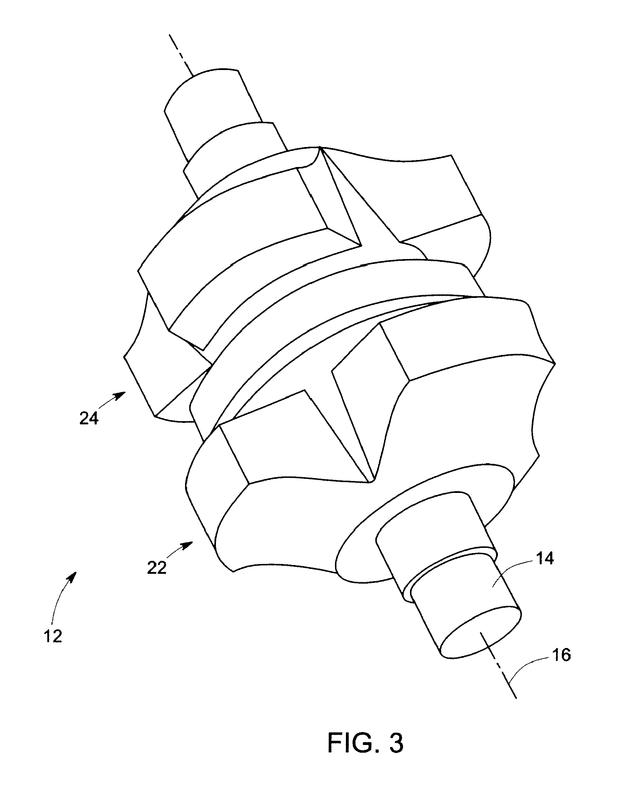

Figure 3 is a perspective view that illustrates an exemplary rotor 12 that may be used with machine 10 (shown in Figure 1). Rotor 12 includes shaft 14, first pole pieces 22 and second pole pieces 24. Pole pieces 22 and 24 define a pole set. The rotor configuration is homopolar such that the plurality of first pole pieces 22 have the same generated magnetic polarity, and the plurality of second pole pieces 24 also have the same generated magnetic polarity. In the exemplary embodiment, each of the plurality of first pole pieces 22 corresponds to a respective one of the plurality of second pole pieces 24. For example, rotor 12 is shown in Figure 2 as including only three pole pieces in each of the plurality of first pole pieces 22 and the plurality of second pole pieces 24. However alternatively, each first pole piece 22 is offset angularly in the direction of rotation of rotor 12 from a respective corresponding one of the second pole pieces 24 by approximately one pole-pitch. The offset of poles 22 and 24 defines a rotating magnetic field of varying magnitude and reversing polarity to stator windings 32, which facilitates generating an alternating electrical output, for example, a sine wave from machine 10.

In operation, an electrical current is supplied to stationary superconducting field coil 40. Current flowing through the superconducting conductors of coil 40 generates a magnetic field surrounding coil 40. First pole pieces 22 and second pole pieces 24 rotate proximate to coil 40 and are magnetically coupled to coil 40. The interaction of the magnetic field generated by coil 40 and the permeance wave of the rotating ferro-magnetic pole pieces 22 and 24 of rotor 12 produces a rotating magnetic field with first pole pieces 22 oriented at a first magnetic polarity, North, for example, and second pole pieces 24 oriented at a second magnetic polarity, South for example. The magnetic lines of flux from pole pieces 22 and 24 pass through stator windings 32 (shown in Figure 1) and generate a current flow in stator windings 32.

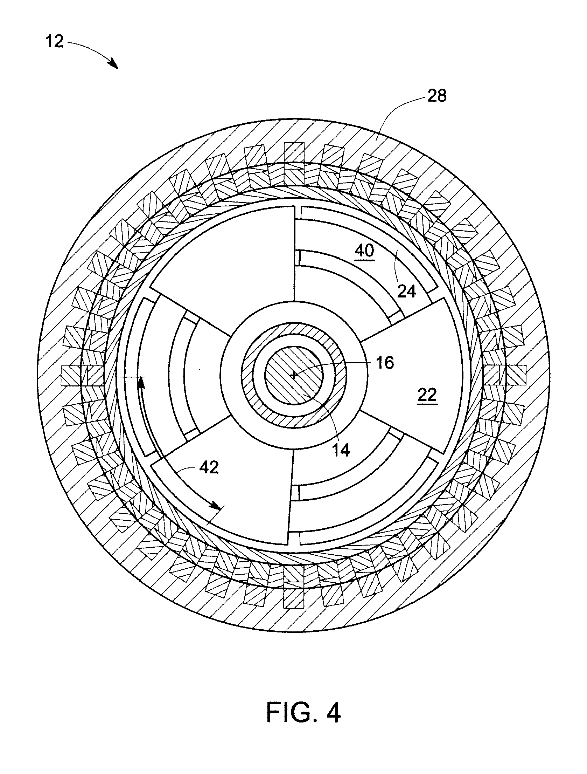

Figure 4 is a cutaway end view of rotor 12 taken along line 3-3 shown in Figure 1. Angle 42 represents an angular offset between the first pole pieces 22 and second pole pieces 24. In the exemplary embodiment, angle 42 represents an angular offset of approximately one pole pitch.

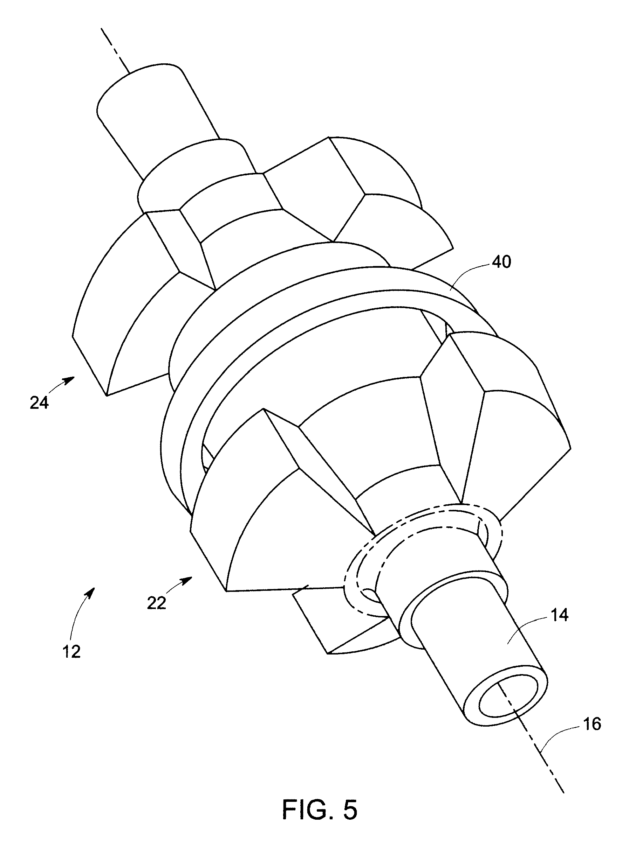

Figure 5 is a perspective view that illustrates an alternative exemplary rotor 12 that may be used with machine 10 (shown in Figure 1). In the alternative embodiment, each of first pole pieces 22 is inline with a corresponding respective second pole piece 24. Field coil 40 generates a magnetic field that interacts with each of first pole pieces 22 and each of second pole pieces 24 to generate a magnetic pole of a first polarity in each of first pole pieces 22 and to generate a magnetic pole of a second opposite polarity in each of second pole pieces 24. In the exemplary embodiment, stator windings 32 are offset by approximately one pole-pitch to generate aiding currents in stator windings 32. For example, if stator windings 32 were substantially axially positioned in stator core 28, the magnetic field of first pole pieces 22 would generate a current of a first polarity in stator windings 32 and second pole pieces 24 would generate current of a second opposite polarity in each winding of stator winding 32. The net result of opposing current flow in each winding of stator windings 32 would be substantially zero current flow in stator windings 32. Therefore, each pole pieces of first pole pieces 22 and each respective pole piece of second pole pieces 24 are offset approximately one pole pitch to facilitate eliminating generating opposing currents in stator windings 32.

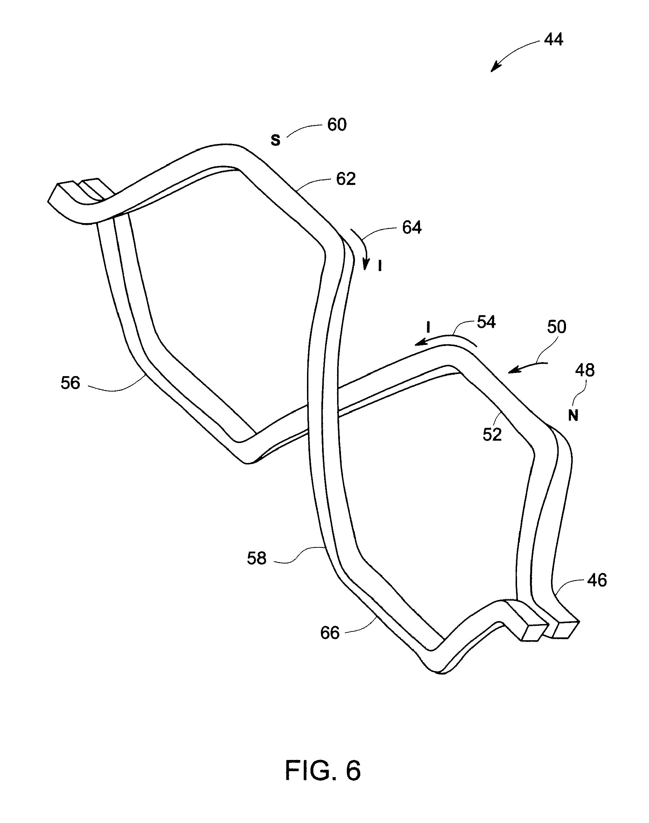

Figure 6 is a partial cutaway perspective view of an exemplary pair of windings 44 that may be used in machine 10 when using the alternative embodiment of rotor 12 shown in Figure 4. A first winding 46 is illustrated with a North polarity pole 48 passing in direction 50 proximate a first portion 52 of winding 46. A current 54 is generated in first winding 46 from the interaction of the rotating magnetic pole 48 and winding 46. First winding 46 is channeled approximately one pole pitch away from portion 52 to portion 56, which is located proximate to a space between second pole pieces 24. With no pole pieces proximate portion 56, there is substantially zero current generated in portion 56, therefore current flows through winding 46. Similarly, a second winding 58 is illustrated with a South polarity pole 60 passing in direction 50 proximate a first portion 62. A current 64 is generated in second winding 58 from the interaction of the rotating magnetic pole 60 and winding 58. Second winding 58 is directed one pole pitch away from portion 62 to portion 66, which is located proximate a space between first pole pieces 24. With no pole pieces proximate portion 66, there is substantially zero current generated in portion 66, therefore current flows through winding 58.

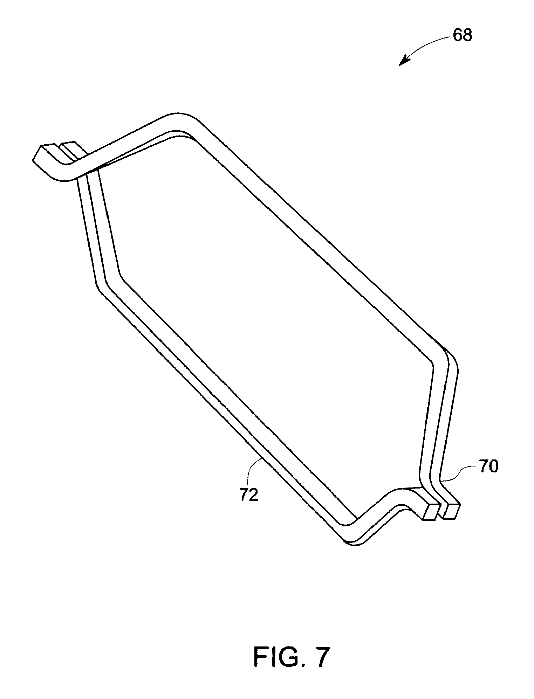

Figure 7 is a partial cutaway perspective view of an exemplary pair of stator windings 68 that may be used in machine 10 when using the alternative embodiment of rotor 12 shown in Figure 2. The first stator winding 70 and the second stator winding 72 are axially oriented and are displaced circumferentially by one pole pitch. It should be noted herein that the first stator winding 70 and the second stator winding 72 are straight windings (may also be referred to as "lap windings"). As discussed with reference to Figure 6, current is generated in the stator windings from the interaction of the rotating magnetic pole and the stator windings.

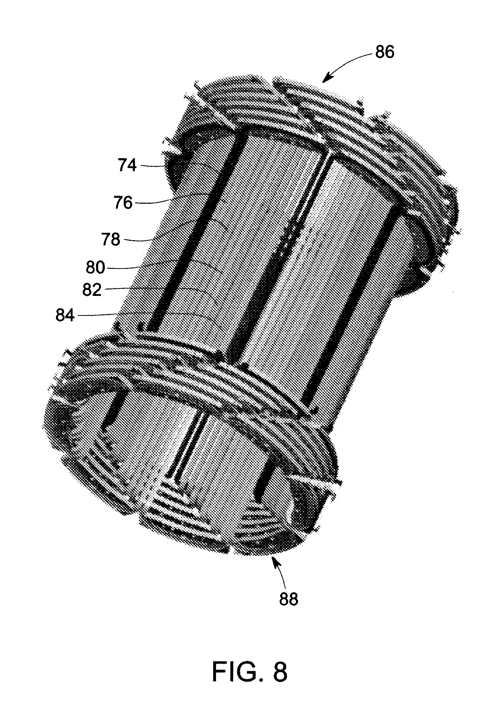

Figure 8 is a partial cutaway perspective view of a plurality of exemplary stator windings that may be used in machine 10 when using the alternative embodiment of rotor 12 shown in Figure 2. A plurality of windings 74, 76, 78, 80, 82, 84 are arranged concentrically between a pair of support units 86, 88. Each of the windings 74, 76, 78, 80, 82, 84 is oriented axially. The length of each of the windings 74, 76, 78, 80, 82, 84 may also be different. Both ends of each winding are bent and coupled to the corresponding support units 86, 88.

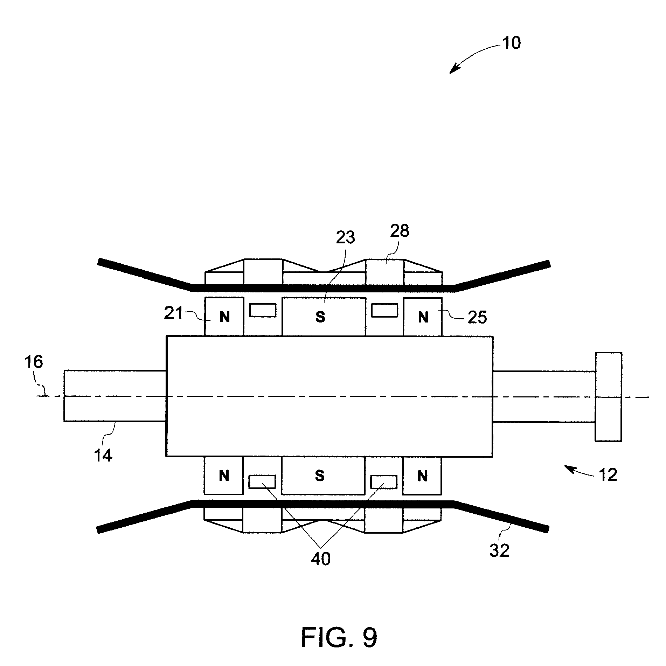

Figure 9 is a side partial cross-sectional view of an exemplary embodiment of the homopolar electrical machine 10 that includes the rotor 12 having the shaft 14 rotatable about the longitudinal axis 16. A plurality of pole piece sets 21, 23, 25 are set in tandem along the shaft 14. The stator windings 32 are positioned in axial channels defined within the stator core 28. A plurality of field coils 40 are positioned between the pole piece sets 21, 23, and 25. In the exemplary embodiment, the field coils 40 are positioned within the cryostat coupled to stator core 28.
The above-described methods and apparatus provide a cost-effective and reliable means for generating electricity using a stationary field coil and a homopolar rotor. More specifically, the methods and apparatus facilitate utilizing a superconducting field coil that is stationary with respect to the machine rotor. As a result, the methods and apparatus described herein facilitate generating electrical power in a cost-effective and reliable manner.
Furthermore, many advantages result from positioning field coil 40 mechanically separate from rotor 14 and maintaining coil 40 stationary, including facilitating making machine 10 simple and reliable. For example, a stationary field coil does not experience relatively large centrifugal forces that may be produced in a rotating field coil, therefore facilitating simplifying a coil support assembly. Thermal insulation between the stationary field coil and ambient temperature may be fabricated more simply due to reduced requirements on the field coil support. In the absence of relatively large forces acting of the field coil, the resulting strains in the superconducting coil may be less, producing a more reliable HTS coil. With a stationary coil circumscribing the rotor, the field coil may be designed as a more simple solenoid coil rather than a more complicated "racetrack" coil. The cryostat cooling a stationary field coil is also stationary, facilitating a simpler cryostat design. For example, a complicated transfer coupling is not needed to direct a cooling medium into the rotating cooling circuit, a simple direct cooling connection may be used. The coil may, instead, be cooled in one of the established, more reliable ways of cooling, including conduction cooling. A vacuum, desirable for thermal insulation may be made stationary, facilitating simpler and more reliable fabrication and assembly. Similarly, other portions of the insulation system may be made more reliable without having to consider relatively large centrifugal forces. There is no need for a 'slip-ring' assembly to transfer current to the field coil from a stationary exciter. The voltage across the coil is then more predictable and makes it easier to detect quench and protect the coil with a reliable stationary protection circuit. Additionally there is no need to consider rotating brushless exciters.

Exemplary embodiments of electrical generating systems are described above in detail. The systems are not limited to the specific embodiments described herein, but rather, components of each system may be utilized independently and separately from other components described herein. Each system component can also be used in combination with other system components.
While the invention has been described in terms of various specific embodiments, those skilled in the art will recognize that the invention can be practiced with modification within the spirit and scope of the claims.
For completeness, various aspects of the invention are now set out in the following numbered clauses:
1. A system, comprising:
   a homopolar electrical machine, comprising:
      a stator comprising a stationary magnetic core and a plurality of stator windings disposed within the stationary magnetic core;
      a rotor comprising a first set of pole pieces at a first end of a shaft and a second set of pole pieces at a second end of the shaft, the pole pieces are separated by air gaps, and the rotor is a one-piece structure having only the shaft, the first set of pole pieces, and the second set of pole pieces integrally formed from a single material; and
      a stationary field coil coupled to the stator, wherein the stationary field coil comprises a cryostat configured to cool the stationary field coil to superconducting temperatures, and the stationary field coil has a coil diameter that is at least partially greater than an outer diameter of the rotor,
   wherein each stator winding is unitarily formed as a single structure that extends along a length of the homopolar electrical machine beyond the first and second sets of pole pieces and is disposed within an air gap of the homopolar electrical machine, and wherein the stationary field coil comprises a high temperature superconductor.
2. The system of clause 1, wherein the coil diameter is greater than a gap diameter of the air gaps between the pole pieces.
3. The system of clause 1, wherein the stationary field coil comprises a solenoid coil and not a racetrack coil.
4. The system of clause 1, wherein the cryostat does not include a transfer coupling attached to the rotor.
5. The system of clause 1, wherein the stationary field coil does not include a slip ring assembly to transfer current from a stationary exciter to the stationary field coil.
6. The system of clause 1, wherein the rotor has a homopolar configuration such that the first set of pole pieces have the same generated magnetic polarity, and the second set of pole pieces have the same generated magnetic polarity.
7. The system of clause 1, wherein the first and second sets of pole pieces are angularly offset from one another by about one pole pitch, the angular offset of the first and second sets of pole pieces is configured to generate an alternating electrical output, wherein the angular offset of the first and second set of pole pieces is configured to define a rotating magnetic field of varying magnitude and reversing polarity relative to stator windings of the stator to produce the alternating electrical output.
8. The system of clause 7, wherein the stator windings comprise straight windings.
9. The system of clause 7, wherein the stator windings are arranged concentrically.
10. The system of clause 1, wherein each pole piece in the first set of pole pieces is axially in line with a pole piece in the second set of pole pieces.
11. The system of clause 1, wherein each stator winding is unitarily formed as a single structure having a first substantially axially oriented portion, a second substantially axially oriented portion, and a diagonal portion extending between the first and second substantially axially oriented portions.
12. The system of clause 1, wherein the stationary field coil is disposed within the cryostat mounted within a stator core of the stator.
13. The system of clause 1, wherein the stationary field coil is disposed on a stator side of the stator windings.
14. The system of clause 1, wherein the coil diameter is greater than a gap diameter of the air gaps between the pole pieces;
   wherein the stationary field coil comprises a solenoid coil and not a racetrack coil, the cryostat does not include a transfer coupling attached to the rotor;
   wherein the stationary field coil does not include a slip ring assembly to transfer current from a stationary exciter to the stationary field coil;
   wherein the rotor has a homopolar configuration such that the first set of pole pieces have the same generated magnetic polarity, and the second set of pole pieces have the same generated magnetic polarity;
   wherein the angular offset of the first and second set of pole pieces is configured to define a rotating magnetic field of varying magnitude and reversing polarity relative to stator windings of the stator to produce the alternating electrical output;
   wherein each stator winding comprises a first substantially axially oriented portion, a second substantially axially oriented portion, and a diagonal portion extending between the first and second substantially axially oriented portions;
   wherein each stator winding is unitarily formed as a single structure having the first and second substantially axially oriented portions and the diagonal portion; and wherein the stationary field coil is disposed within the cryostat mounted within a stator core of the stator.
15. A system, comprising:
   an alternating current (AC) device, comprising:
      a stator comprising a stationary magnetic core and a plurality of stator windings disposed within the stationary magnetic core;
      a rotor comprising a first set of pole pieces at a first end of a shaft and a second set of pole pieces at a second end of the shaft, each pole piece is a radial segment that protrudes radially outward from a first diameter to a second diameter of the rotor; and
      a stationary field coil coupled to the stator, wherein the stationary field coil is a superconducting coil having stationary cooling, and the stationary field coil has a coil diameter that is at least greater than the first diameter of the rotor;
      wherein each stator winding is unitarily formed as a single structure that extends along a length of the AC device beyond the first and second sets of pole pieces and is disposed within an airgap of the AC device, and wherein the stationary field coil comprises a high temperature superconductor.
16. The system of clause 15, wherein each pole piece in the first set of pole pieces is axially in line with a pole piece in the second set of pole pieces, the stationary field coil is configured to generate a magnetic field that interacts with each of the first and second pole pieces to generate a magnetic pole of a first polarity in each of the first pole pieces and to generate a magnetic pole of a second polarity in each of the second pole pieces, and the first and second polarities are opposite from one another; wherein the stator windings are offset by about one pitch.
17. The system of clause 15, wherein the first and second sets of pole pieces are angularly offset from one another by about one pole pitch, and the angular offset of the first and second sets of pole pieces is configured to define a rotating magnetic field of varying magnitude and reversing polarity relative to stator windings of the stator to produce an alternating electrical output.
18. The system of clause 17 wherein the stator windings comprise straight windings.
19. The system of clause 17, wherein the stator windings are arranged concentrically.
20. The system of clause 15, wherein the rotor has a homopolar configuration such that the first set of pole pieces have the same generated magnetic polarity, and the second set of pole pieces have the same generated magnetic polarity.
21. The system of clause 15, wherein each stator winding is unitarily formed as a single structure having a first substantially axially oriented portion, a second substantially axially oriented portion, and a diagonal portion extending between the first and second substantially axially oriented portions.
22. The system of clause 15, further comprising a cryostat configured to cool the stationary field coil to superconducting temperatures, wherein the stationary field coil is disposed within the cryostat mounted within a stator core of the stator.
23. The system of clause 22, wherein the cryostat does not include a transfer coupling attached to the rotor, and the stationary field coil does not include a slip ring assembly to transfer current from a stationary exciter to the stationary field coil.
24. The system of clause 15, wherein the rotor is a one-piece structure having only the shaft, the first set of pole pieces, and the second set of pole pieces integrally formed from a single material.
25. The system of clause 15, wherein the stationary field coil comprises a solenoid coil and not a racetrack coil.
26. The system of clause 15, wherein the stationary field coil is disposed on a stator side of the stator windings.
27. A system, comprising:
   an alternating current (AC) homopolar inductor alternator, comprising:
      a stator comprising a stationary magnetic core and a plurality of stator windings disposed within the stationary magnetic core;
      a stationary field coil coupled to the stator, wherein the stationary field coil is a superconducting coil having stationary cooling; and
      a ferromagnetic rotor comprising a first set of pole pieces at a first end of a shaft and a second set of pole pieces at a second end of the shaft,
   wherein the stationary field coil has a coil diameter that is at least greater than first circumferential gaps between pole pieces in the first set of pole pieces and second circumferential gaps between pole pieces in the second set of pole pieces;
   wherein each stator winding is unitarily formed as a single structure that extends along a length of the AC homopolar inductor alternator beyond the first and second sets of pole pieces and is disposed within an airgap of the AC homopolar inductor alternator, and wherein the stationary field coil comprises a high temperature superconductor.
28. The system of clause 27, wherein the stationary field coil is not completely recessed within an outer cylindrical structure of the ferromagnetic rotor.
29. The system of clause 27, wherein the stationary field coil is disposed on a stator side of the stator windings.
30. The system of clause 27, wherein the first set of pole pieces comprises only three radially protruding segments separated by the first circumferential gaps, and the second set of pole pieces comprises only three radially protruding segments separated by the second circumferential gaps.
31. The system of clause 27, wherein the first and second sets of pole pieces are angularly offset from one another by about one pole pitch, and the angular offset of the first and second set of pole pieces is configured to define a rotating magnetic field of varying magnitude and reversing polarity relative to stator windings of the stator to produce an alternating electrical output.
32. The system of clause 31, wherein the stator windings comprise straight windings.
33. The system of clause 31, wherein the stator windings are arranged concentrically.
34. The system of clause 27, wherein each pole piece in the first set of pole pieces is axially in line with a pole piece in the second set of pole pieces.
35. The system of clause 27, wherein the rotor has a homopolar configuration such that the first set of pole pieces have the same generated magnetic polarity, and the second set of pole pieces have the same generated magnetic polarity.
36. The system of clause 27, wherein each stator winding is unitarily formed as a single structure having a first substantially axially oriented portion, a second substantially axially oriented portion, and a diagonal portion extending between the first and second substantially axially oriented portions.
37. The system of clause 27, further comprising a cryostat configured to cool the stationary field coil to superconducting temperatures, wherein the stationary field coil is disposed within the cryostat mounted within a stator core of the stator.
38. The system of clause 27, wherein the rotor is a one-piece structure having only the shaft, the first set of pole pieces, and the second set of pole pieces integrally formed from a single material.
39. A system, comprising:
   an alternating current (AC) electrical machine, comprising:
      a stator comprising a stationary magnetic core and a plurality of stator windings disposed within the stationary magnetic core, wherein each stator winding comprises a first substantially axially oriented portion, a second substantially axially oriented portion, and a diagonal portion extending between the first and second substantially axially oriented portions, wherein each stator winding is unitarily formed as a single structure having the first and second substantially axially oriented portions and the diagonal portion;
      a rotor comprising a first set of pole pieces at a first end of a shaft and a second set of pole pieces at a second end of the shaft, the pole pieces are separated by air gaps, and the rotor is a one-piece structure having only the shaft, the first set of pole pieces, and the second set of pole pieces integrally formed from a single material; and
      a stationary field coil coupled to the stator, wherein the stationary field coil comprises a cryostat configured to cool the stationary field coil to superconducting temperatures, and the stationary field coil has a coil diameter that is at least partially greater than an outer diameter of the rotor;
   wherein each stator winding is unitarily formed as a single structure that extends along a length of the AC electrical machine beyond the first and second sets of pole pieces and is disposed within an airgap of the AC electrical machine, and wherein the stationary field coil comprises a high temperature superconductor.
40. The system of clause 39, wherein the first and second sets of pole pieces are angularly offset from one another by about one pole pitch, the angular offset of the first and second sets of pole pieces is configured to generate an alternating electrical output.
41. The system of clause 40, wherein the stator windings comprise straight windings.
42. The system of clause 40, wherein the stator windings are arranged concentrically.
43. The system of clause 39, wherein each pole piece in the first set of pole pieces is axially in line with a pole piece in the second set of pole pieces.

## Claims

1. A system, comprising:
a homopolar electrical machine (10), comprising:
a stator comprising a stationary magnetic core (28) and a plurality of stator windings (32) disposed within the stationary magnetic core (28);
a rotor (12) comprising a first set of pole pieces (22) at a first end of a shaft (14) and a second set of pole pieces (24) at a second end of the shaft (14), the pole pieces (22, 24) are separated by air gaps (33), and the rotor (12) is a one-piece structure having only the shaft (14), the first set of pole pieces (22), and the second set of pole pieces (24) integrally formed from a single material; and
a stationary field coil (40) coupled to the stator, wherein the stationary field coil (40) comprises a cryostat (41) configured to cool the stationary field coil (40) to superconducting temperatures, and the stationary field coil (40) has a coil diameter that is at least partially greater than an outer diameter of the rotor (12),
wherein each stator winding (32) is unitarily formed as a single structure that extends along a length of the homopolar electrical machine (10) beyond the first and second sets of pole pieces (22, 24) and is disposed within an air gap (38) of the homopolar electrical machine (10), and wherein the stationary field coil (40) comprises a high temperature superconductor.

2. The system of claim 1, wherein the coil diameter is greater than a gap diameter of the air gaps (38) between the pole pieces (22, 24).

3. The system of claim 1 or 2, wherein the stationary field coil (40) comprises a solenoid coil and not a racetrack coil.

4. The system of any of the preceding claims, wherein the cryostat (41) does not include a transfer coupling attached to the rotor (12).

5. The system of any of the preceding claims, wherein the stationary field coil (40) does not include a slip ring assembly to transfer current from a stationary exciter to the stationary field coil (40).

6. The system of any of the preceding claims, wherein the rotor has a homopolar configuration such that the first set of pole pieces have the same generated magnetic polarity, and the second set of pole pieces have the same generated magnetic polarity.

7. The system of any of the preceding claims, wherein the first and second sets of pole pieces are angularly offset from one another by about one pole pitch, the angular offset of the first and second sets of pole pieces is configured to generate an alternating electrical output, wherein the angular offset of the first and second set of pole pieces is configured to define a rotating magnetic field of varying magnitude and reversing polarity relative to stator windings of the stator to produce the alternating electrical output.

8. The system of claim 7, wherein the stator windings comprise straight windings.

9. The system of claim 7, wherein the stator windings are arranged concentrically.

10. The system of any of the preceding claims, wherein each pole piece in the first set of pole pieces is axially in line with a pole piece in the second set of pole pieces.

11. The system of any of the preceding claims, wherein the stationary field coil (40) is disposed on a stator side (47) of the stator windings (32).

12. A system, comprising:
an alternating current (AC) device (10), comprising:
a stator comprising a stationary magnetic core (28) and a plurality of stator windings (32) disposed within the stationary magnetic core (28);
a rotor (12) comprising a first set of pole pieces (22) at a first end of a shaft (14) and a second set of pole pieces (24) at a second end of the shaft (14), each pole piece (22, 24) is a radial segment that protrudes radially outward from a first diameter to a second diameter of the rotor (12); and
a stationary field coil (40) coupled to the stator, wherein the stationary field coil (40) is a superconducting coil having stationary cooling, and the stationary field coil (40) has a coil diameter that is at least greater than the first diameter of the rotor (12);
wherein each stator winding (32) is unitarily formed as a single structure that extends along a length of the AC device (10) beyond the first and second sets of pole pieces (22, 24) and is disposed within an airgap (38) of the AC device (10), and wherein the stationary field coil (40) comprises a high temperature superconductor.

13. A system, comprising:
an alternating current (AC) homopolar inductor alternator (10), comprising:
a stator comprising a stationary magnetic core (28) and a plurality of stator windings (32) disposed within the stationary magnetic core (28);
a stationary field coil (40) coupled to the stator, wherein the stationary field coil (40) is a superconducting coil having stationary cooling; and
a ferromagnetic rotor (12) comprising a first set of pole pieces (22) at a first end of a shaft (14) and a second set of pole pieces (24) at a second end of the shaft (14),
wherein the stationary field coil (40) has a coil diameter that is at least greater than first circumferential gaps (33) between pole pieces in the first set of pole pieces (22) and second circumferential gaps (38) between pole pieces in the second set of pole pieces (24);
wherein each stator winding (32) is unitarily formed as a single structure that extends along a length of the AC homopolar inductor alternator (10) beyond the first and second sets of pole pieces (22, 24) and is disposed within an airgap (38) of the AC homopolar inductor alternator (10), and wherein the stationary field coil (40) comprises a high temperature superconductor.

14. The system of claim 13, wherein the stationary field coil (40) is not completely recessed within an outer cylindrical structure of the ferromagnetic rotor (12).

15. A system, comprising:
an alternating current (AC) electrical machine (10), comprising:
a stator comprising a stationary magnetic core (28) and a plurality of stator windings (32) disposed within the stationary magnetic core (28), wherein each stator winding (32) comprises a first substantially axially oriented portion, a second substantially axially oriented portion, and a diagonal portion extending between the first and second substantially axially oriented portions, wherein each stator winding (32) is unitarily formed as a single structure having the first and second substantially axially oriented portions and the diagonal portion;
a rotor (12) comprising a first set of pole pieces (22) at a first end of a shaft (14) and a second set of pole pieces (24) at a second end of the shaft (14), the pole pieces (22, 24) are separated by air gaps (38), and the rotor (12) is a one-piece structure having only the shaft (14), the first set of pole pieces (22), and the second set of pole pieces (24) integrally formed from a single material; and
a stationary field coil (40) coupled to the stator, wherein the stationary field coil (40) comprises a cryostat (41) configured to cool the stationary field coil (40) to superconducting temperatures, and the stationary field coil (40) has a coil diameter that is at least partially greater than an outer diameter of the rotor (12);
wherein each stator winding (32) is unitarily formed as a single structure that extends along a length of the AC electrical machine (10) beyond the first and second sets of pole pieces (22, 24) and is disposed within an airgap (33) of the AC electrical machine (10), and wherein the stationary field coil (40) comprises a high temperature superconductor.
